# EUROPÄISCHE PATENTSCHRIFT

(11) **EP 0 686 071 B1**
(45) Veröffentlichungstag und Bekanntmachung des Hinweises auf die Patenterteilung: **02.05.1997**
(21) Anmeldenummer: 94906924.9
(22) Anmeldetag: 08.02.1994
(51) Int. Cl.: B21K 25/00, F16K 27/00

(54) **VERFAHREN ZUM VERSCHLIESSEN VON DRUCKMITTEL FÜHRENDEN KANÄLEN IN EINEM GEHÄUSE**
PROCESS FOR CLOSING CHANNELS CONVEYING PRESSURE MEDIUM IN A HOUSING
PROCEDE POUR L'OBTURATION DE CANAUX VEHICULANT UN FLUIDE DE PRESSION DANS UN LOGEMENT

(30) Priorität: 27.02.1993 DE 4306220
(43) Veröffentlichungstag der Anmeldung: 13.12.1995
(73) Patentinhaber: ITT Automotive Europe GmbH, 60488 Frankfurt (DE)
(72) Erfinder: REINARTZ, Hans-Dieter, D-60439 Frankfurt am Main (DE); VOLZ, Peter, D-64291 Darmstadt (DE); ZAVISKA, Dalibor, D-65760 Eschborn/Ts (DE); WEISBROD, Helmut, D-61231 Bad-Nauheim (DE)
(86) Internationale Anmeldenummer: EP9400357
(87) Internationale Veröffentlichungsnummer: WO9419128

(56) Entgegenhaltungen:
- DE-A- 3 141 259
- DE-A- 3 145 469
- DE-A- 4 221 988
- GB-A- 2 038 682

## Beschreibung

Die Erfindung betrifft ein Verfahren zum Verschließen von Druckmittel führenden Kanälen in einem Gehäuse nach dem Oberbegriff des Anspruchs 1.

In der DE-A-42 21 988 ist ein mit einer elektromagnetisch gesteuerten Ventilfunktion versehener Schließkörper beschrieben, der als Ventilaufnahmekörper (Patrone) ausgeführt, in das Druckmittel führende und mit Stufenbohrungen versehene Kanalsystem eines Ventilgehäuseblocks eingepreßt ist. Der Einpreßvorgang führt unter Umständen nicht nur zu einer mechanischen Verdrängung des im Bereich der Stufenbohrung befindlichen Werkstoffvolumens in die nutförmigen Einformungen am Ventilaufnahmekörper, sondern kann auch zu einer unerwünschten Mitverformung benachbarter und durch Bohrungen geschwächter Bereiche des Ventilgehäuseblocks führen, was die Maßhaltigkeit dieser festigkeitssensiblen Bereiche beeinträchtigt.

Aus der DE-A-31 45 469 geht ein Verfahren und eine Vorrichtung zur Herstellung einer kraft- und formschlüssigen Verbindung hervor, mit einem mit einer Ausnehmung versehenen ersten Bauteil und einem von der Ausnehmung wenigstens teilweise aufzunehmenden zweiten Bauteil, wobei das erste Bauteil durch Verformen des äußeren Randbereiches an einer Ausnehmung des ersten Bauteils in eine Ausnehmung des zweiten Bauteils eingebracht wird. Dabei gelangt wenigstens ein Teil der Ausnehmung des ersten Bauteils innerhalb der Ausnehmung des zweiten Bauteils. Dies geschieht durch einen von außen auf das erste Bauteil aufgesetzten Stempel, der sich mit seinem konisch ausgebildeten Vorsprung im äußeren Randbereich der Ausnehmung des ersten Bauteils anlegt und den Randbereich des ersten Bauteils durch Druck oder Schlagbelastung in die Ausnehmung des zweiten Bauteils verformt. Der Grad und die Richtung der Verformung des Gehäusematerials (erstes Bauteil) wird durch die Höhe und den Winkel der Abschrägung des Vorsprungs am Stempel bestimmt. Dabei ist die Ausnehmung am Bolzen (zweites Bauteil) so bemessen, daß sie von dem verformten Bereich des Gehäuses unter leichter Spannung ausgefüllt wird. Bei Verwendung von Kunststoffbauteilen für die miteinander zu verbindenden Bauteile ist eine definierte Verformung des Randsbereichs am Gehäuse mittels Ultraschall möglich.

Daher ist es die Aufgabe der Erfindung, ein Verfahren zum Verschließen von Druckmittel führenden Kanälen in einem Gehäuse dahingehend zu spezifizieren, daß während des Einpreßvorganges eine möglichst geringe dynamische Gesamtbeanspruchung des Gehäuses eintritt sowie ein kleinstmöglicher und damit auf den für den Formschluß notwendigen Gehäusebereich begrenzter plastischer Verformungsgrad gewährleistet ist.

Diese Aufgabe wird erfindungsgemäß durch die Merkmale des Anspruchs 1 gelöst.

Durch die in den Unteransprüchen aufgezeigten Maßnahmen sind zweckmäßige Ausbildungen der Erfindung angegeben, die im Zusammenhang mit den weiteren Merkmalen und Vorteilen der Erfindung nachfolgend anhand mehrerer Zeichnungen näher dargestellt und erläutert werden.

Es zeigen:
- Figur 1: einen Querschnitt durch ein Gehäuse zur Aufnahme von mehreren Druckmittelkanälen sperrenden Schiießkörpern,
- Figur 2: ein erstes dynamisches Belastungsdiagramm,
- Figur 3: ein zweites dynamisches Belastungsdiagramm.

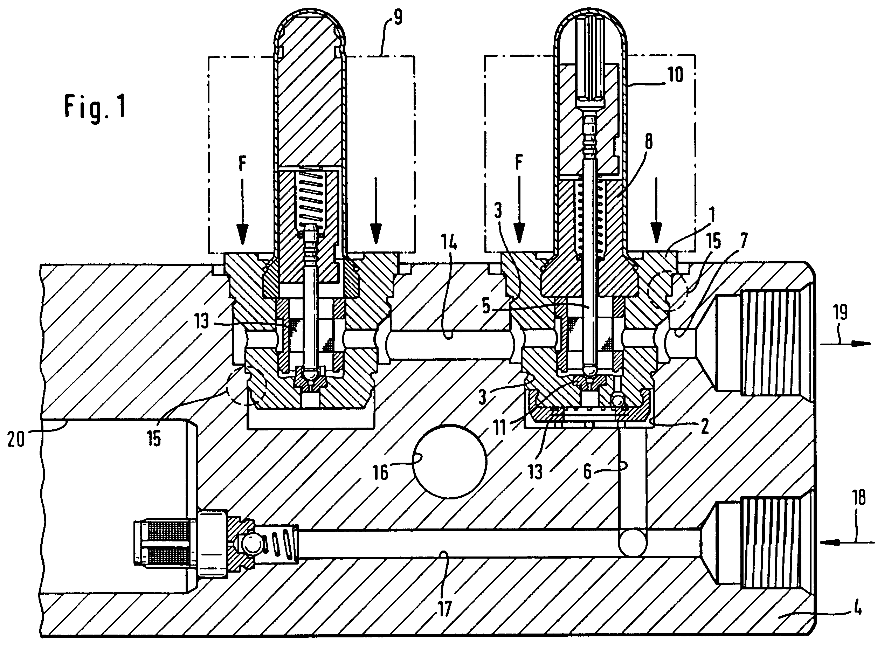

Die Figur 1 zeigt beispielhaft die Verwendung des erfindungsgemäßen Befestigungsverfahrens für mehrere Elektromagnetventile, innerhalb eines blockförmigen Gehäuses 4, das gleichzeitig eine Pumpe, eine Dämpfereinrichtung sowie Druckmittelanschlüsse zu einem Druckmittelversorger und zu Druckmittelverbrauchern aufweist. Der Schließkörper 1 ist ein im wesentlichen hülsenförmiges, nur wenige Millimeter abmessendes Teil, welches vorzugsweise aus kaltgezogenem und aus einem relativ zum Gehäuse 4 härteren Werkstoffgefüge besteht. Das vorzugsweise aus einer Aluminiumlegierung gefertigte Gehäuse 4 ist dementsprechend weniger hart als die beispielsweise aus Automatenstahl hergestellten Schließkörper 1. Dieser Härteunterschied ist letztlich ausschlaggebend für die im wesentlichen formschlüssige Befestigung der Schließkörper 1 im Gehäuse 4. Als konstruktiv zweckdienliche Maßnahme erweist sich die als umlaufende Ringnuten ausgeführten Einformungen 3 an jedem Schließkörper 1, die näherungsweise hohlkehlenförmig jeweils an der im Durchmesser abgestuften Mantelfläche des Schließkörpers 1 angeordnet sind. Hierdurch kann das relativ weiche Werkstoffvolumen des Gehäuses 4 während des Einpreßvorganges jeweils als umlaufende Nase in die Einformung 3 plastisch verformt einfließen und verdichtet werden. Damit übernimmt jeder Schließkörper 1 infolge des in Fügerichtung abnehmenden Durchmessers in der Abstufung die Funktion eines Verstemmstempels, dem jede Stufenbohrung 2 des Gehäuses 4 im Durchmesser angepaßt ist. Die ursprüngliche Tiefe der jeweiligen Bohrungsstufe im Gehäuse 4 ist entsprechend um das in Fügerichtung in die Einformungen 3 zu verdrängende Volumen kleiner bemessen, als der erforderliche Verstemmhub des Verstemmstempels bzw. des Schließkörpers 1. Wie aus der Darstellung hervorgeht, nimmt jeder hülsenförmige Schließkörper 1 die von einein Ventilstößel 5 verschließbaren Kanäle 6, 7, den Magnetkern 8, die Magnetspule 9, die Ventilhülse 10, den Ventilsitz 11 und einen Filter 13 auf. Um eine sichere Abdichtung des Schließkörpers 1 im Gehäuse 4 zu gewährleisten, ist jeweils die als Querkanal ausgebildete Druckmitteldurchgangsbohrung 14 abbildungsgemäß oberhalb und unterhalb zur Kanalführung mit einer umlaufenden Verstemmstelle 15 versehen, so daß einerseits bei geschlossenem Ventilstößel 5 ein Kurzschlußstrom und damit ein Druckausgleich zwischen den beiden Kanälen 6, 7 des Gehäuses 4 verhindert ist, andererseits bei geöffnetem Ventilstößel 5 das unter hohem Druck stehende Fluid nicht in Richtung der abbildungsgemäßen oberen Verstemmstelle 15 an die Oberfläche des Gehäuses 4 durchdringen kann. Die Verstemmstellen 15 erzeugen folglich nicht nur die Haltekraft zur Befestigung des Magnetventils, sondern gewährleisten gleichzeitig die Abdichtung des hydraulisch beaufschlagten Schließkörpers 1 im Gehäuse 4. Abbildungsgemäß ist unterhalb der die beiden Magnetventile verbindenden Druckmitteldurchgangsbohrung 14 eine quer verlaufende Bohrung 16 zur Aufnahme der Pumpe vorgesehen, so daß sich die Pumpenbohrung lotrecht zwischen den Magnetventilachsen erstreckt. Ferner verbindet in der Zeichnung der unterhalb der Pumpenbohrung gelegene Kanal 17 beispielsweise einen als Bremsdruckgeber für schlupfgeregelte Kraftfahrzeugbremsanlagen ausgelegten Druckmittelversorger 18 über das in der Grundstellung stromlos offene Magnetventil mit dem beispielhaft als Radbremse eines Kraftfahrzeugs wirksamen Druckmittelverbraucher 19, wobei im Abzweig zu diesem Druckmittelpfad die Pumpenbohrung eine in der Abbildung nicht gezeigte hydraulische Verbindung zu einer Pumpen-Geräuschdämpfungskammer 20 aufweist, die ebenfalls mit dem Kanal 17 in Verbindung steht.

Ergänzend zu den eingangs gemachten Erläuterungen wird auf die weitere Möglichkeit zur Anordnung einer separaten, das heißt zusätzlichen Einscherungbzw. Verstemmung des Schließkörpers 1 mit einein Werkzeug an der Gehäuseoberfläche verwiesen.

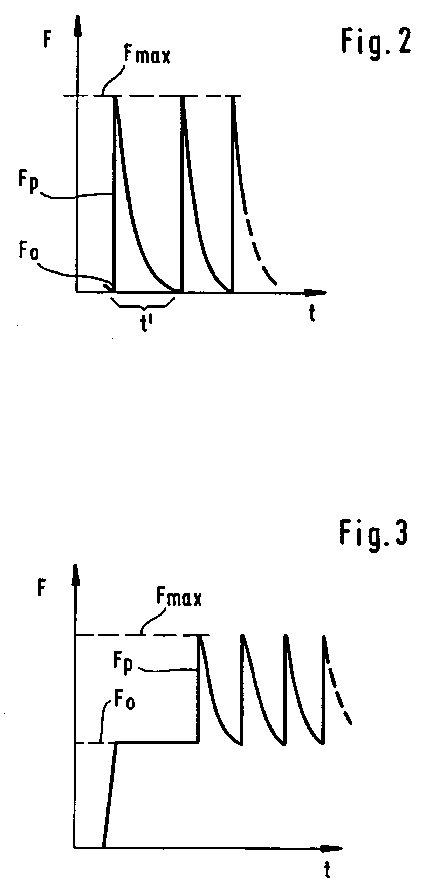

Um die maßhaltige ursprüngliche Gehäusestruktur während des Einpreßvorganges jedes Schließkörpers 1 in die Stufenbohrungen 2 zu gewährleisten, werden die äußeren Stirnflächen der Schließkörper 1 mit einer variablen Einpreßkraft F beaufschlagt, die nachfolgend anhand zweier Diagramme (Figur 2, 3) veranschaulicht werden.

Die Figur 2 zeigt ein Kraft- Zeit- Schaubild für einen dynamisch zyklischen Belastungsfall des Schließkörpers 1, wonach die Kraftamplitude der Einpreßkraft F über ein erstes Zeitintervall t' sprunghaft entlang der Abszisse von einem Minimalwert linear auf den zulässigen Maximalwert Fmax der Ordinate ansteigt und anschließend wieder auf den Ursprungswert Fo absinkt. Dieser dynamische Belastungsfall wiederholt sich solange in einer zyklischen Reihenfolge, bis beim Erreichen der zulässigen plastischen Endverformung der Stufenbohrung 2 im Gehäuse 4 die Reibungs- und Formwiderstandskraft einen definierten Grenzwert erreicht, der über den Maximalwert Fmax der zyklisch aufgebrachten Einpreßkraft F liegt, womit eine weitere Vorschubbewegung des Schließkörpers 1 in die Stufenbohrung 2 bei konstantem Kraftimpuls Fp durch den Reibungs- und Formwiderstand vermieden ist.

Die Figur 3 zeigt eine zu Figur 2 alternative Kraft- Zeit- Kennlinie für einen dynamisch zyklischen, schwellenden Belastungsfall des Schließkörpers 1, wonach die Kraftamplitude zunächst über ein erstes Zeitintervall linear auf eine konstante Vorspannkraft Fo ansteigt, gehalten wird und anschließend zwischen der Vorspannkraft Fo und einem Maximalwert Fmax periodisch aufgebracht wird. Damit schwankt der Verlauf der Schwellkraft jeweils periodisch zwischen der Grundvorspannung des Schließkörpers 1 und dem Maximalwert Fmax der Kraftamplitude.

Durch die Erfindung kann bei relativ kleinen intervallmäßig aufgebrachten Kraftimpulsen geringer Intensität der Vorgang zur Verformung des den Formschluß bildenden Gehäusebereichs auf die Stufenbohrung gezielt begrenzt werden, ohne daß die Maßhaltigkeit oder die Gefügestruktur konstruktiv geschwächter Randbereiche beeinträchtigt wird. Über die bereits aufgezeigten Merkmale der Erfindung hinaus, sind hiervon weitere Ausgestaltungsvarianten ableitbar, die jedoch als Bestandteil der Erfindung im einzelnen nicht weiter erläutert werden.

### Bezugszeichenliste

- 1: Schließkörper
- 2: Stufenbohrung
- 3: Einformung
- 4: Gehäuse
- 5: Ventilstößel
- 6, 7: Kanäle
- 8: Magnetkern
- 9: Magnetspule
- 10: Ventilhülse
- 11: Ventilsitz
- 13: Filter
- 14: Druckmitteldurchgangsbohrung
- 15: Verstemmstelle
- 16: Bohrung (Pumpe)
- 17: Kanal
- 18: Druckmittelversorger
- 19: Druckmittelverbraucher
- 20: Dämpfungskammer
- F: Einpreßkraft
- Fp: Kraftimpuls
- Fmax: Maximalwert
- Fo: Ursprungswert/Vorspannkraft

## Patentansprüche

1. Verfahren zum Verschließen von Druckmittel führenden Kanälen (6,7) in einem Gehäuse (4) mit Hilfe eines in einen Kanal einzupressenden Schließkörpers (1), an dessen Außenumfang wenigstens eine Einformung (3) angeordnet ist, in die beim Einpressen des Schließkörpers (1) in den Kanal Grundmaterial des Gehäuses (4) zur Bildung eines Formschlusses verdrängt wird, wobei der Kanal als Stufenbohrung (2) ausgebildet ist, deren zur Gehäuse-Außenseite gerichtete Bohrungsabschnitt mit größerem Durchmesser über einen Absatz in einen der Druckmittelseite zugewandten inneren Bohrungsabschnitt mit kleinerem Durchmesser übergeht und wobei der Schließkörper (1) zwei den beiden Bohrungsabschnitten entsprechende Kolbenabschnitte mit unterschiedlich großen Durchmessern aufweist, zwischen denen die relativ zum kleineren Durchmesser hinterschnittene Einformung ausgebildet ist, in die durch plastische Verformung das den Formschluß bewirkendes Grundmaterial gepreßt wird, wobeimittels einer dynamisch zyklisch auf den Schließkörper (1) einwirkenden Einpreßkraft (F) definierter Richtung und Größe der Schließkörper (1) eine in den Kanal (2) gerichtete diskontinuierliche Vorschubbewegung vollzieht, und wobei ausschließlich das an der Einformung (3) des Schließkörpers (1) den plastischen Formschluß bewirkende Gehäusematerial unter dynamisch zyklischer Kraftwirkung am Schließkörper (2) in die Einformung (3) verdrängt wird.

2. Verfahren nach Anspruch 1, dadurch **gekennzeichnet**, daß die Einpreßkraft (F) durch eine kurzzeitige zyklische Abfolge von konstanten Kraftimpulsen (Fp) gebildet wird, wobei die Amplitude zu Anfang des Kraftimpulses (Fp) bis zum Erreichen des Maximalwertes (Fmax) eine lineare Sprungfunktion vollzieht, und daß nach Überschreiten des Impulsmaximums mittels eines gedämpften Ausschwingvorgangs die Amplitude auf einen relativ zum Maximalwert (Fmax) kleineren Ursprungswert (Fo) abklingt.

3. Verfahren nach Anspruch 1, dadurch **gekennzeichnet**, daß die Einpreßkraft (F) aus einer Kraftamplitude gebildet wird, die beginnend von einer auf den Schließkörper (1) permanent wirksamen Vorspannkraft (Fo) auf einen die Vorschubbewegung des Schließkörpers (1) bewirkenden Kraftimpuls (Fp) erhöht wird, wobei nach Erreichen des Maximalwertes (Fmax) des Kraftimpulses (Fp) ein gedämpfter Ausschwingvorgang des Kraftimpulses (Fmax) eingeleitet wird.

4. Verfahren nach Anspruch 3, dadurch **gekennzeichnet**, daß während des Einpreßvorganges des Schließkörpers (1) das Kraftminimum des Kraftimpulses (Fp) der Vorspannkraft (Fo) entspricht.

5. Verfahren nach einem der vorhergehenden Ansprüche 3 bis 4, dadurch **gekennzeichnet**, daß der Kraftimpuls (Fp) periodisch zwischen der Vorspannkraft (Fo) und dem Maximalwert (Fmax) vorzugsweise im Millisekunden-Bereich variiert wird, wobei der Schließkörper (1) unter Wirkung des Kraftimpulses (Fp) eine zyklische Vorschubbewegung in Richtung der Stufenbohrung (2) vollzieht.

6. Verfahren nach einem der vorhergehenden Ansprüche, dadurch **gekennzeichnet**, daß der Kraftimpuls (Fp) periodisch zwischen der Vorspannkraft (Fo) und dem Maximalwert (Fmax) nach einer Sinusfunktion variiert wird, wobei der Schließkörper (1) unter Wirkung des Kraftimpulses (Fp) eine zyklische Vorschubbewegung in Richtung der Stufenbohrung (2) vollzieht.

7. Verfahren nach einem der vorhergehenden Ansprüche 1 bis 6, dadurch **gekennzeichnet**, daß die auf den Schließkörper (1) einwirkende Einpreßkraft entlang der Außenberandung des Schließkörpers (1) zirkular umlaufend aufgebracht wird, wobei der Schließkörper (1) eine in den Kanal (2) gerichtete taumelnde Vorschubbewegung vollzieht.

## Claims

1. Method of closing channels (6,7) containing pressure fluid in a housing (4) by means of a closing member (1) to be pressed into a channel, on the outer periphery of which closing member is arranged at least one recess (3) in which the basic material of the housing (4) is caused to yield, when the closing member (1) is pressed into the channel, in order to achieve a form-lock, the channel being configured as a stepped bore (2), the bore section of which, oriented towards the outside of the housing and having a larger diameter, by means of a shoulder passes into an inner bore section with smaller diameter, oriented towards the delivery side of the pressure fluid, and the closing member (1) includes two piston sections corresponding to the two bore sections and having different diameters, between which is formed the recess undercut with regard to the smaller diameter, in which recess the basic material is pressed by plastic deformation to provide the form-lock, the closing member (1) by means of the dynamical cyclical pressing force (F) of a defined direction and magnitude acting on the closing member (1), carrying out a discontinuous feed motion oriented into the channel (2), and causing only the housing material which provides the plastic form-lock at the recess (3) of the closing member (1) to yield into the recess (3) due to the dynamic cyclical force acting on the closing member (1).

2. Method as claimed in claim 1,
**characterized** in that the pressing force (F) is produced by a short-time cyclical sequence of constant force impulses (Fp), the amplitude rising abruptly and in a linear manner at the beginning of the force impulse (Fp) until it reaches the maximum value (Fmax), and in that the amplitude, after exceeding the impulse maximum, by means of a damped dying process returns to an original value (Fo) which is smaller with regard to the maximum value (Fmax).

3. Method as claimed in claim 1,
**characterized** in that the pressing force (F) is formed of a force amplitude which, beginning from a preloading force (Fo) permanently acting upon the closing member (1), is increased up to a force impulse (Fp) which causes the feed motion of the closing member (1), a damped dying process of the force impulse (Fmax) being introduced after having reached the maximum value (Fmax) of the force impulse (Fp).

4. Method as claimed in claim 3,
**characterized** in that when the closing member (1) is pressed in, the force minimum of the force impulse (Fp) corresponds to the preloading force (Fo).

5. Method as claimed in any one of the preceding claims 3 to 4,
**characterized** in that the force impulse (Fp) varies periodically between the preloading force (Fo) and the maximum value (Fmax), preferably in the range of milliseconds, the closing member (1) under the impact of the force impulse (Fp) performing a cyclical feed motion in the direction of the stepped bore (2).

6. Method as claimed in any one of the preceding claims,
**characterized** in that the force impulse (Fp) varies periodically between the preloading force (Fo) and the maximum value (Fmax) according to a sine function, the closing member (1), under the impact of force impulse (Fp), performing a cyclical feed motion in the direction of the stepped bore (2).

7. Method as claimed in any one of the preceding claims 1 to 6,
**characterized** in that the pressing force acting on the closing member (1) along its outer border is applied in a circular circumferential manner, the closing member (1) performing a wobbling feed motion directed into the channel (2).

## Revendications

1. Procédé permettant d'obturer des conduits (6, 7), pratiqués dans un boîtier (4) et servant au passage d'un agent de pression, au moyen d'un obturateur (1) qui doit être emboîté à force dans un conduit et sur la périphérie extérieure duquel est disposée au moins une partie évidée (3) dans laquelle la matière de base du boîtier (4) est refoulée pour réaliser une solidarisation par complémentarité de formes lorsque l'obturateur (1) est emboîté à force dans le conduit, le conduit étant réalisé sous forme d'un alésage étagé (2) dont la section d'alésage de plus grand diamètre qui est tournée vers le côté extérieur du boîtier se raccorde par l'intermédiaire d'un épaulement à une section intérieure d'alésage de plus petit diamètre tournée vers le côté de l'agent de pression, l'obturateur (1) comportant deux sections de piston de diamètres de grandeurs différentes qui correspondent aux deux sections d'alésage et entre lesquelles est réalisée la partie évidée qui est en contre-dépouille vis-à-vis du plus petit diamètre et dans laquelle la matière de base fournissant la solidarisation par complémentarité de formes est repoussée par déformation plastique, tandis qu'un mouvement discontinu d'avance dirigé dans le conduit (2) est exécuté au moyen d'une force (F) d'emboîtement de l'obturateur (1), de direction et intensité définies, qui agit d'une manière dynamique cyclique sur l'obturateur (1) et que, sous l'effet de la force dynamique cyclique agissant sur l'obturateur (1), c'est exclusivement la matière du boîtier fournissant la solidarisation par complémentarité de formes de type plastique à l'endroit de la partie évidée (3) de l'obturateur (1) qui est refoulée dans la partie évidée (3).

2. Procédé selon la revendication 1, caractérisé en ce que la force d'emboîtement (F) est formée par une série cyclique de courte durée d'impulsions de force (Fp) constantes, l'amplitude suivant une fonction linéaire brusque au début de l'impulsion de force (Fp) jusqu'à ce que la valeur maximale (Fmax) soit atteinte, et en ce qu'une fois le maximum d'impulsion franchi, l'amplitude décroît jusqu'à une valeur initiale (Fo) plus petite en comparaison de la valeur maximale (Fmax), au moyen d'une phase de variation d'amplitude qui est amortie.

3. Procédé selon la revendication 1, caractérisé en ce que la force d'emboîtement (F) est formée d'une amplitude de force qui, en partant d'une force de précontrainte (Fo) agissant de façon permanente sur l'obturateur (1), est augmentée jusqu'à une impulsion de force (Fp) provoquant le mouvement d'avance de l'obturateur (1), tandis qu'une fois que la valeur maximale (Fmax) de l'impulsion de force (Fp) est atteinte, c'est une phase de variation d'amplitude de l'impulsion de force (Fmax), qui est amortie, qui se déroule.

4. Procédé selon la revendication 3, caractérisé en ce que, pendant la phase d'emboîtement à force de l'obturateur (1), le minimum de force de l'impulsion de force (Fp) est égal à la force de précontrainte (Fo).

5. Procédé selon l'une des revendications précédentes 3 et 4, caractérisé en ce qu'on fait varier l'impulsion de force (Fp) d'une façon périodique entre la force de précontrainte (Fo) et la valeur maximale (Fmax), de préférence dans le domaine des millisecondes, l'obturateur (1) exécutant, sous l'action de l'impulsion de force (Fp), un mouvement cyclique d'avance dans le sens de l'alésage étagé (2).

6. Procédé selon l'une des revendications précédentes, caractérisé en ce qu'on fait varier l'impulsion de force (Fp) d'une façon périodique, suivant une fonction sinus, entre la force de précontrainte (Fo) et la valeur maximale (Fmax), l'obturateur (1) exécutant, sous l'action de l'impulsion de force (Fp), un mouvement cyclique d'avance dans le sens de l'alésage étagé (2).

7. Procédé selon l'une des revendications précédentes 1 à 6, caractérisé en ce que la force d'emboîtement agissant sur l'obturateur (1) est appliquée suivant un mouvement périphérique circulaire le long du pourtour extérieur de l'obturateur (1), l'obturateur (1) exécutant un mouvement d'avance, dirigé dans le conduit (2), à la façon d'un mouvement de nutation.
